# EUROPÄISCHE PATENTANMELDUNG

(11) **EP 1 398 214 A1**
(43) Veröffentlichungstag der Anmeldung: **17.03.2004**
(21) Anmeldenummer: 02020169.5
(22) Anmeldetag: 11.09.2002
(51) Int. Cl.: B60Q 1/30

(54) **Vorrichtung zur automatischen Fixierung von Warnmarkierungen**

(71) Anmelder: Bär, Gerd, 74078 Heilbronn (DE)
(72) Erfinder: Bär, Gerd, 74078 Heilbronn (DE)

(57) **Zusammenfassung**

Eine Vorrichtung zur automatischen Fixierung von Warnmarkierungen an Plattformen von Hubladebühnen besteht aus einem in die Plattform (1 ) eingelassenen Dauermagneten (4), der die Warnmarkierung (2), die an ihrem unteren Ende quer angeordnet eine magnetische Metallleiste (21) hat, bei senkrechter Lage der Plattform (1) automatisch arretiert.

Um beim Öffnen der Plattform (1 ) die Warnmarkierung (2) zu lösen, hat der Dauermagnet (4) eine elektrische Einrichtung, die beim Bestromen den Magnetismus aufhebt.

## Beschreibung

### Stand der Technik

Hubladebühnen haben eine Plattform, die bei Inbetriebnahme, wie Heben und Senken über den LKW hinaus- und in den Verkehrsraum hineinragt. Da sich für Auto- und Radfahrer die Plattform oft in Augenhöhe befindet, sind derartige Plattformen im Straßenverkehr schlecht zu erkennen. Dies hat in früherer Vergangenheit bei nicht oder zu spätem Erkennen zu schweren Unfällen geführt.

Aus diesem Grund sind in Deutschland nach § 53b Abs. 5 StVZO seit mehreren Jahren zur Kenntlichmachung dieser Gefahr Warnblinkleuchten und Warnmarkierungen vorgeschrieben. Die Warnblinkleuchten sind auf der Lauffläche der Plattform fest aufgeschraubt. Da die Warnblinkleuchten erst bei fast vollständiger Öffnung der Plattform sichtbar werden, sind zusätzlich Warnmarkierungen vorgeschrieben, welche auf der Unterseite der Plattform so weit wie möglich in Spitzennähe zu befestigen sind.

### Technisches Problem

Die Warnmarkierungen sind einseitig oben, scharnierartig befestigt. Beim Öffnen der Plattform behalten die Warnmarkierungen durch ihre Schwerkraft die senkrechte Lage bei und sind so bis zur waagrechten Position der Plattform für den nachfolgenden Verkehr immer sichtbar. Da die Warnmarkierungen so weit wie möglich an der Spitze befestigt sein müssen, bleibt sehr wenig Platz, wenn die Plattform auf den Boden abgesenkt und entsprechend Ihrer Keilform abgeneigt ist. Da die Warnmarkierungen aus Kunststoff sind, haben diese bei tiefen Temperaturen eine gewisse Steifheit. Sie sind jedoch in allen Richtungen voll beweglich und biegsam, um bei diesem Vorgang nicht zerstört zu werden.

Ein entsprechender Verschleiß am Boden ist dennoch gegeben. Ein erhöhter Verschleiß besteht aber bei Fahrt durch die Aerodynamik. Bei einem Solo-LKW oder einem Anhänger nehmen die Warnmarkierungen während der Fahrt eine relativ stabile senkrechte Lage ein. Bei einem Gliederzug sind die Warnmarkierungen am Motorwagen durch die Aerodynamik und die dadurch verursachten Luftwirbel einer hohen Belastung durch intensives Flattern ausgesetzt. Dieses Flattern verschleißt in kurzer Zeit die reflektierende Beschichtung der Warnmarkierung. In vielen Fällen führt es auch zum Abreißen der Warnmarkierungen. Der Grad der Beanspruchung hängt von den Bauverhältnissen des Gliederzuges, wie Abstand zwischen LKW und Anhänger sowie deren gleichem oder nicht gleichem Querschnitt ab.

Im Extremfall haben Warnmarkierungen in dieser Konstellation nur eine Lebensdauer von wenigen Wochen. Warnmarkierungen, die vorgeschriebene Reflexionswerte ähnlich wie Leuchten und eine Typprüfung haben müssen, sind teuer, was bei einem hohen Verschleiß eine Kostenfrage darstellt. Hinzu kommt, dass der Fahrer oder Verantwortliche ständig den Zustand kontrollieren und in unvorherbestimmbaren Intervallen die Warnmarkierungen auswechseln muss. Dies ist so gut wie unpraktikabel und vor allen Dingen sehr teuer.

Um diesem Problem abzuhelfen, wird in den Gebrauchsmustern G 92 15 138.8 / G 93 09 708.5 vorgeschlagen, die Warnmarkierungen mit einem Gummizug an der Plattform zu befestigen. Diese Technik widerspricht aber der Vorschrift, dass Warnmarkierungen und Blinkleuchten automatisch in Funktion gehen müssen.

Dessen ungeachtet kann selbst ein sorgfältiger Fahrer, der die Warnmarkierungen befestigt und löst, dies nicht ohne Leiter tun, wenn es sich um ein hohes Fahrzeug und eine hohe Plattform handelt. Es handelt sich hier um eine rein theoretische und zudem unzulässige Methode.

### Lösung

Erfindungsgemäß werden die Warnmarkierungen während der Fahrtstellung magnetisch festgehalten. Hierzu haben die Warnmarkierungen im unteren Bereich quer angeordnet magnetische Metallleisten. In die Plattformplatte ist ein Dauermagnet eingelassen. Im Neuzustand sind die Warnmarkierungen noch eben und gerade, der befestigte Metallstreifen stabilisiert die Warnmarkierungen und das Eigengewicht des Metallstreifens lässt die Warnmarkierungen senkrecht hängen. Beim Schließvorgang trifft dann der Einschwenkradius der Warnmarkierungen mit dem Metallstreifen auf die/den eingelassenen Dauermagnete(n). Die Warnmarkierungen werden so parallel zur Plattformoberfläche von dem/den Magneten festgehalten.

Um jetzt beim Öffnen der Plattform die Warnmarkierungen wieder zu lösen, hat der Dauermagnet eine elektrische Einrichtung (z. B. Elektromagnet), die beim Bestromen den Magnetismus aufhebt. Dadurch werden die Warnmarkierungen durch die Schwerkraft frei und nehmen die senkrechte Lage und damit ihre Warnfunktion ein. Damit kann der Absenk-, Abneige-/Ent- und Beladevorgang in gewohnter Weise erfolgen.

Zur Vermeidung einer separaten Schaltung hierfür kann die Entmagnetisierung der Magnete zu den ohnehin in der StVZO § 53b Abs. 5 vorgeschriebenen Blinkleuchten parallel geschaltet werden. Die Warnblinkleuchten werden durch einen Lageschalter in der Plattform bei einem Öffnungswinkel von 15° - 20° eingeschaltet. Dabei wird der Dauermagnet über den Blinkleuchten-Intervall parallel entmagnetisiert. Beim ersten Intervall lässt der Magnet die Warnmarkierung los.

Die Festhaltekraft des/der Magneten muss höher sein als die Kräfte, die durch die aerodynamischen Turbulenzen auf die Warnmarkierungen einwirken. Dies erfordert eine relativ hohe Magnetkraft durch zwei starke Magnete an den jeweiligen Enden einer Warnmarkierung.

Zur Verbesserung der Wirtschaftlichkeit und Erhöhung der Sicherheit kann auch mit einem einzelnen Magneten, der mittig im unteren Bereich der Warnmarkierungen angeordnet ist, gearbeitet werden. Durch die Aerodynamik wollen sich die Warnmarkierungen aufblähen und dadurch vom Dauermagneten abziehen. In dieser Richtung hat der Dauermagnet nur einen Bruchteil der Festhaltekraft wie 90° zur Senkrechten. Um trotzdem mit einem Magneten arbeiten zu können, ist der über die Warnmarkierung nach unten überstehende Metallstreifen links und rechts mit je einem Langloch versehen. Auf der Plattform befindet sich ein entsprechend ausgebildeter Gegenwinkel, der in senkrechter Lage der Plattform in die Langlöcher eingreift. In dieser Position hält der Magnet die Warnmarkierung am Metallstreifen fest.

Beginnen nun in der Startphase der Fahrt die Warnmarkierungen aufzublähen und nach oben zu ziehen, wird dies durch den Formschluss Langloch/Gegenwinkel verhindert. Die Aufgabe des Magneten ist hierbei nur noch, die Warnmarkierungen über den Metallstreifen unter dem Gegenwinkel zu halten.

### Erreichte Vorteile

Derart erfindungsgemäß ausgestaltete Warnmarkierungen können wie herkömmliche benützt werden. Es gibt keinerlei Bedienungsaufwand. Das Festhalten der Warnmarkierungen und damit die Verhinderung von Verschleiß durch Turbulenzen wird automatisch sicher verhindert. Die Lebensdauer der Warnmarkierungen wird extrem verlängert. Dies gilt nicht nur für die mechanische Zerstörung der Warnmarkierungsstruktur. Warnmarkierungen sind typgeprüft mit E-Zeichen und müssen eine bestimmten Retroreflektierungswert aufweisen. Herkömmliche Warnmarkierungen werden aber außer der Verschleißwirkung am Boden durch das Flattern der Aerodynamik in ihrer retroreflektierenden Oberfläche beeinträchtigt. Im Extremfall ist die Warnmarkierungsstruktur noch vorhanden und die retroreflektierende Oberfläche total zerstört. Durch die erfindungsgemäße Ausführung wird die Beanspruchung durch das Flattern beim Fahren auf ein vernachlässigbares Minimum reduziert. Es gibt keinerlei zusätzlich mechanisch bewegte Teile. Die Ausführung ist sehr einfach und wirtschaftlich herzustellen. Die Einsparung durch die erfindungsgemäße Ausgestaltung beträgt in den beschriebenen Anwendungsfällen mehr als das zehnfache im Vergleich zu den Investitionsmehrkosten.

Der Verbrauch von elektrischem Strom erfolgt nur während der eigentlichen Ladearbeit mit geöffneter Plattform, parallel zu den ohnehin blinkenden Warnblinkleuchten. Bei geschlossener Plattform erfolgt kein Stromverbrauch. Auch die elektrische Schaltung ist denkbar einfach. Der Anschluss erfolgt an der ohnehin an dieser Stelle vorhandenen Verkabelung für die Warnblinkleuchten durch entsprechende Kabelbrücken.

### Beschreibung

- Figur 1: zeigt die Rückansicht einer Plattform 1 für Hubladebühnen mit den vorgeschriebenen Warnmarkierungen 2, ohne die Vorrichtung zur automatischen Fixierung.
- Figur 2: zeigt das Detail der Figur 4 Langloch/Gegenwinkel, Draufsicht.
- Figur 3: zeigt das Detail der Figur 5, Seitenansicht.
- Figur 4: zeigt die Warnmarkierung 2 mit der Vorrichtung zur automatischen Fixierung bei senkrechter Lage der Plattform 1 in der Draufsicht.
- Figur 5: zeigt die Warnmarkierung 2 mit der Vorrichtung zur automatischen Fixierung bei senkrechter Lage der Plattform 1 in der Seitenansicht.
- Figur 6: zeigt die Seitenansicht der Warnmarkierung 2 bei teilweise geöffneter Plattform 1.

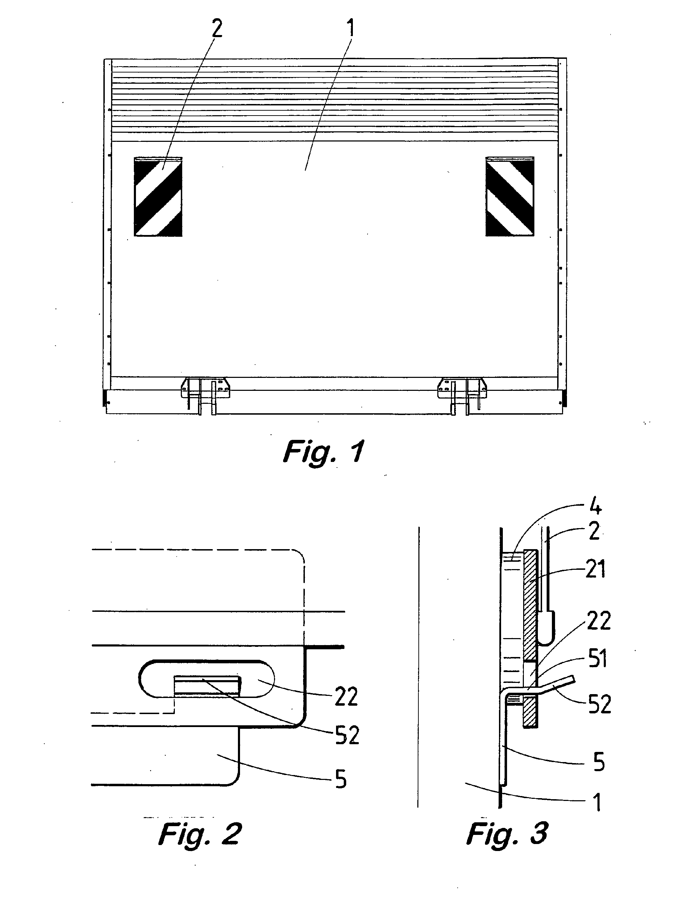

Warnmarkierungen 2 müssen "so weit wie möglich", so die Vorschrift, an der Spitze und an der Seite von Plattformen 1 angebracht werden. Dies ist verständlich, um beim Öffnungsvorgang den gefährlichen Bereich möglichst nahe zu signalisieren. Der gefährliche Bereich ist die äußerste Kante der Plattform 1. Die geriffelte Fläche in der Figur 1 zeigt den Bereich der Plattformspitze, die Bodenberührung hat. Kurz darunter wird die Warnmarkierung 2 befestigt. Die Warnmarkierung 2 als bewegliches Teil ist im gezeigten Ausführungsbeispiel mit einem Warnmarkierungshalter 3, der als Aluminiumstrangpressprofil hergestellt ist, durch Vernieten (nicht dargestellt) an der Plattform befestigt. Die Verbindung der Warnmarkierung 2 mit dem Warnmarkierungshalter 3 erfolgt nach dem Kederprinzip, d. h. die Warnmarkierung 2 hat an ihrem oberen Ende eine kreisrunde Verdickung, die mit Luft formschlüssig in die Kederöffnung des Warnmarkierungshalters 3 eingreift. Dadurch entsteht der gedachte Drehpunkt 31.

Durch die derartige Aufhängung behält die Warnmarkierung 2 beim Öffnen der Plattform 1 ihre senkrechte Lage bei. Bei geöffneter Plattform 1 hängt diese in etwa im rechten Winkel zur Plattform 1. Ab ca. 45° Öffrungswinkel beginnt die Warnwirkung der Warnmarkierung 2 für den nachfolgenden Verkehr.

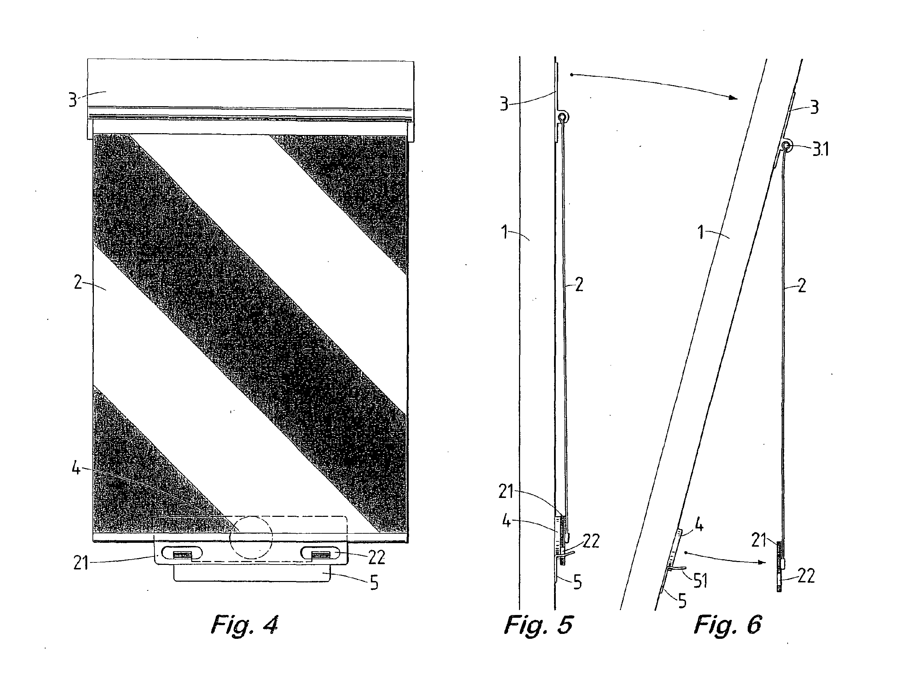

Um bei der Warnmarkierung 2 bei geschlossener Plattform 1 und während der Fahrt des LKWs das Flattern zu verhindern, ist am unteren Ende der Warnmarkierung 2 die Fixiervorrichtung vorgesehen. Die Übersicht zeigt Figur 5, das Detail Figur 3. Die Warnmarkierung 2 ist mit der magnetischen Metallleiste 21 durch Ankleben, Einnähen oder ähnlichem fest verbunden. Nach Figur 4 hat die magnetische Metallleiste 21 in der Breite eine Ausdehnung von ca. zwei Drittel der Warnmarkierungsbreite. Das Zentrum der magnetischen Metallleiste 21 trifft in etwa auf das Zentrum des Dauermagneten 4, der seinerseits an oder auf der Plattform 1 befestigt ist. Die Befestigung wird nicht gezeigt.

Durch die Einwirkung der Magnetkraft auf die magnetische Metallleiste 21 wird die Warnmarkierung 2, wie in Figur 5 gezeigt, in senkrechter Lage nahezu senkrecht, parallel gegenüber der Plattform 1 platziert. Die entsprechende Fixierung nur mit Magnetkraft ist technische ohne weiteres möglich, aber sehr aufwendig. Wird die Warnmarkierung 2 nur über Magnete 4 fixiert, ist die Hauptkraftrichtung nicht 90° zum Magneten 4, sondern quer hierzu. Die Warnmarkierung 2 will sich aber bei Fahrt aufblähen. Diese wird einerseits im gedachten Drehpunkt 31 und andererseits an der magnetischen Metallleiste 21 /Magnet 4 festgehalten. Die Magnetkraft hierfür muss hoch sein, dass die Warnmarkierung 2 mit magnetischen Metallleiste 21 nicht in Richtung zum gedachten Drehpunkt 31 vom Magnet 4 abgezogen wird. So starke Magnete wären unwirtschaftlich. Um das Abziehen trotz eines schwachen Magneten zu verhindern, kann die Warnmarkierung 2 in der senkrechten Lage durch das Prinzip Hakenöse gesichert werden.

Die magnetische Metallleiste 21 hat in ihrem überstehenden Bereich zwei Fanglöcher 22, die in den Haken 5 eingreifen. Haken 5 ist in nicht näher bezeichneter Weise mit der Plattform 1 verbunden. Sein freier Schenkel hat zwei Bereiche, und zwar den Fangbereich 52 und den Haltebereich 51. Der Fangbereich 52 ist so gestaltet, dass er beim Einschwenken der Warnmarkierung 2 auf der Mittellinie des Fangloches 22 zu liegen kommt und damit optimale Einweiswirkung hat. Der Haltebereich 51 ist winkelrecht zum Magneten 4 und der magnetischen Metallleiste 21 angeordnet. Treten jetzt zu Beginn der Fahrt und damit zu Beginn des Aufblähens die Zugkräfte auf, verhindert der Formschluss des Hakens 5 mit seinem Haltebereich 51 im Fangloch 22 der magnetischen Metallleiste 21 das Abziehen. In dieser Situation hat der Magnet 4 nur noch die Aufgabe, die magnetische Metallleiste 21 im Haltebereich 51 des Hakens 5 zu halten. Damit werden die Hauptkräfte durch das Prinzip Haken und Öse aufgenommen.

Wird die Plattform 1 nun geöffnet, wird der Magnet 4, der eine elektrische Entmagnetisierungseinrichtung (z. B. zusätzlicher Elektromagnet) hat, bestromt, damit lässt er die Warnmarkierung 2 mit der magnetischen Metallleiste 21 los und durch die Schwerkraft schwenkt die Warnmarkierung 2 aus der Halteposition heraus (Figur 6).

Die Bestromung der Entmagnetisierungseinrichtung erfolgt auf einfachste Weise durch die Parallelschaltung mit den ohnehin vorhandenen Warnblinkleuchten. Diese wiederum werden durch einen in der Plattform 1 befindlichen Lageschalter bei einem Öffnungswinkel zwischen 15° und 20° eirgeschaltet. Durch das Parallelschalten mit den Warnblinkleuchten wird die Entmagnetisierungseinrichtung nicht dauerbestromt, sondern mit dem Blinkintervall der Warnblinkleuchten. Die Entmagnetisierungseinrichtung ist so dimensioniert, dass ein Bestromungsintervall ausreicht, die Warnmarkierung 2 sicher loszulassen. Die Intervallbestromung der Entmagnetisierungseinrichtung während des Be- und Entladevorgangs spielt weder für die Entmagnetisierungseinrichtung noch für den Stromverbrauch eine Rolle, da dieser vernachlässigbar klein ist.

Beim Schließen der Plattform erfolgt der umgekehrte Vorgang. Nach Erreichen eines Schließwinkels von 15° bis 20° schaltet der Lageschalter die Blinkleuchten aus und damit den Magneten 4 frei, d. h. er entfaltet wieder seine Dauermagnetwirkung und zieht die magnetische Metallleiste 21 mit der Warnmarkierung 2 in die Position nach Figur 3 und Figur 5.

## Patentansprüche

1. Vorrichtung zur Fixierung einer Warnmarkierung an Plattformen von Hubladebühnen, die hinter dem Aufbau stehen oder diesen verschließen,
**gekennzeichnet dadurch,**
**dass** die Warnmarkierung (2) mit Erreichen der senkrechten Lage der Plattform (1) an ihrem unteren Ende automatisch an der Plattform (1) arretiert wird, und
**dass** sich beim Öffnen der Plattform ( 1 ) die Arretierung innerhalb eines Öffnungswinkels von 25° automatisch löst.

2. Vorrichtung zur Fixierung einer Warnmarkierung nach Anspruch 1,
**gekennzeichnet dadurch,**
**dass** die Arretierung mit einem elektrisch entmagnetisierbaren Dauermagneten (4) erfolgt.

3. Vorrichtung zur Fixierung einer Warnmarkierung nach Anspruch 1,
**gekennzeichnet dadurch,**
**dass** die Arretierung mit einem Elektromagneten erfolgt.

4. Vorrichtung zur Fixierung einer Warnmarkierung nach einem der vorangegangenen Ansprüche,
**gekennzeichnet dadurch,**
**dass** die Magnetkraft-Hauptrichtung in etwa 90° zur Verbindungslinie zum gedachten Drehpunkt (31 ) der
Warnmarkierung (2) wirkt.

5. Vorrichtung zur Fixierung einer Warnmarkierung nach einem der vorangegangenen Ansprüche,
**gekennzeichnet dadurch,**
**dass** zusätzlich zum Magneten (4) eine mechanische Sicherungsvorrichtung nach dem Prinzip Haken und Öse vorhanden ist, die die Kräfte in Richtung zum gedachten Drehpunkt (31) aufnimmt.
